# FASCICULE DE BREVET EUROPEEN

(11) **EP 2 490 290 B1**
(45) Date de publication et mention de la délivrance du brevet: **20.08.2014**
(21) Numéro de dépôt: 12151496.2
(22) Date de dépôt: 18.01.2012
(51) Int. Cl.: H01M 8/04

(54) **Raccord de fluide pour plaque de pile à combustible, plaque de pile à combustible et pile à combustible correspondantes**
Flüssigkeitsanschluss für Brennstoffzellenplatte, entsprechende Brennstoffzellenplatte und entsprechende Brennstoffzelle
Fluid coupling for a fuel cell plate, corresponding fuel cell plate and fuel cell

(30) Priorité: 17.02.2011 FR 1151285
(43) Date de publication de la demande: 22.08.2012
(73) Titulaire: L'AIR LIQUIDE, Société Anonyme pour l'Etude et l'Exploitation des Procédés Georges Claude, 75007 Paris (FR)
(72) Inventeur: Paris, Marion, 38000 Grenoble (FR); Patras, Eric, 38000 Grenoble (FR)
(74) Mandataire: De Cuenca, Emmanuel Jaime

(56) Documents cités:
- EP-A1- 2 221 908
- WO-A2-2008/021258
- CN-A- 101 408 264

## Description

La présente invention concerne un raccord de fluide pour plaque de pile à combustible, une plaque de pile à combustible ainsi une pile à combustible.

L'invention concerne plus particulièrement un raccord de fluide pour plaque de pile à combustible, comprenant un corps définissant un passage interne de fluide qui s'étend entre une première extrémité du corps destinée à être reliée à une arrivée de fluide réactif ou à un collecteur de fluide réactif et une seconde extrémité du corps destinée à être reliée avec un orifice d'entrée ou de sortie d'un circuit de réactif d'une plaque de pile à combustible.

Un empilement (« Stack ») de cellules de pile à combustible est un assemblage de plusieurs cellules électrochimiques. Chaque cellule comprend deux plaques (par exemple bipolaires), un Assemblage Membrane Electrode (AME), des joints de plaque et un système de raccords fluidiques permettant l'arrivée et la sortie des fluides dans la cellule.

Ces raccords permettent l'arrivée et la sortie des fluides (air, hydrogène et eau) dans la cellule tout en maintenant une étanchéité avec l'extérieur. En position montée sur les plaques, ces raccords doivent être maintenus mécaniquement de façon à ce que, lors de l'assemblage ou de la maintenance des cellules, ces raccords restent en place et ne risquent pas de créer des fuites.

Pour des raisons de coûts de fabrication, ce système doit aussi être facile et rapide à mettre en place

Un système connu de fixation des raccords sur une plaque métallique utilise un rabat métallique solidaire de la plaque. C'est-à-dire que, lorsque le raccord est relié fluidiquement avec l'entrée/sortie, l'opérateur vient rabattre mécaniquement une portion pliable de la plaque métallique pour bloquer le raccord sur la plaque.

Ce système n'est pas totalement satisfaisant. En effet, le maintien des raccords sur la plaque n'est pas fiable et le temps de montage/démontage est relativement long du fait de la difficulté des manipulations requises. En particulier, le montage d'un nouveau raccord après démontage d'un ancien raccord est problématique puisque le risque de fuite est accru du fait d'un repositionnement de l'entrée de fluide relativement difficile et non précis.

Le document EP 2 221 908 A1 décrit un raccord de fluide pour plaque de pile à combustible selon le préambule de la revendication 1.

Un but de la présente invention est de pallier tout ou partie des inconvénients de l'art antérieur relevés ci-dessus.

A cette fin, le raccord selon l'invention, par ailleurs conforme à la définition générique qu'en donne le préambule ci-dessus, est essentiellement **caractérisé en ce que** le corps du raccord comprend une fente d'accrochage, au moins une des faces interne de la fente comprenant un organe d'attache mâle ou femelle, l'organe d'attache de la fente étant destiné à coopérer en accrochage mécanique avec un organe d'attache femelle ou mâle conjugué d'une plaque de pile à combustible introduite dans la fente.

L'invention concerne également une plaque de pile à combustible comprenant au moins un raccord de fluide selon les caractéristiques ci-dessus ou ci-dessous, la plaque comprenant une face dite réactive comportant un circuit de circulation pour un réactif, et une face dite inactive, la plaque comprenant au moins un orifice d'entrée ou de sortie de réactif raccordé au circuit de circulation, la plaque comprenant au moins un organe d'attache adjacent à l'orifice et coopérant en accrochage avec un organe d'attache conjugué formé sur une face interne de la fente d'accrochage du corps du raccord, le raccord étant fixé de façon amovible sur la plaque par déformation élastique, en position fixée sur la plaque, la seconde extrémité du corps coïncidant avec l'orifice orifice de plaque.

Par ailleurs, des modes de réalisation de l'invention peuvent comporter l'une ou plusieurs des caractéristiques suivantes :
- la plaque comprend au moins un orifice d'entrée de réactif et au moins un orifice de sortie de réactif et un organe d'attache respectif adjacent à chaque orifice, chaque organe d'attache de la plaque coopérant en accrochage avec un organe d'attache conjugué formé sur une face interne de la fente d'accrochage du corps d'un raccord respectif, les raccords étant fixés de façon amovible sur la plaque par déformation élastique,
- le ou les organes d'attache de la plaque comportent un orifice formé dans l'épaisseur de la plaque, le ou les organes d'attache conjugués des raccords comportant un ergot,
- la plaque a une forme générale parallélépipédique, le ou les organes d'attache de la plaque sont formés sur des pattes respectives qui s'étendent par rapport à la bordure de la plaque,
- le au moins un raccord possède une fente située dans un plan distinct du passage interne de fluide de sorte que, lorsque le raccord est en position attachée sur la plaque, le passage interne de fluide est situé du côté de face inactive de la plaque,
- le au moins un orifice d'entrée ou de sortie traverse l'épaisseur de la plaque, la seconde extrémité du corps du raccord étant conjuguée de la forme de l'orifice, en position attachée du raccord sur la plaque, la seconde extrémité du corps du raccord coopérant de façon étanche avec ledit orifice,
- le au moins un orifice est entouré par une bordure en saillie par rapport au plan de la plaque, la seconde extrémité du corps du raccord formant une gorge complémentaire de la bordure en saillie du au moins un orifice,
- le corps du raccord est constitué d'un matériau comprenant du plastique et en ce que la plaque comprend ou est constituée d'un matériau métallique et/ou d'un alliage métallique et/ou de carbone,

L'invention concerne également une cellule élémentaire de pile à combustible comprenant deux plaques de pile à combustible prenant en sandwich un Assemblage Membrane Electrode, les plaques étant conformes à l'une quelconque des caractéristiques ci-dessus ou ci-après.

L'invention concerne également une pile à combustible comprenant un empilement de cellules élémentaires conformes aux caractéristiques ci-dessous ou ci-dessus.

Selon d'autres particularités possibles :
- la pile à combustible est du type à membrane échangeuse de protons,
- la ou les plaques sont du type polaire ou bipolaires.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue de côté, partiellement en coupe, illustrant la fixation d'un raccord sur une plaque de pile dans un exemple de réalisation possible d'invention,
- la figure 2 représente une vue agrandie d'un détail A du raccord de la figure 1,
- la figure 3 représente une vue en perspective d'un détail de la face inactive d'une plaque de pile à combustible comprenant un raccord selon l'invention,
- la figure 4 représente une vue en perspective d'un détail de la face active de la plaque de pile de la figure 3.

Une plaque 7 de pile à combustible, notamment une plaque bipolaire comprend généralement une face 17 dite réactive comportant un circuit de circulation pour un réactif en contact avec une membrane d'un AME et une face opposée dite inactive.

Le circuit de circulation de la face active de la plaque 7 est par exemple réalisé par des nervures délimitant un canal qui serpente sur la partie centrale de la plaque destinée à venir en vis-à-vis d'une membrane échangeuse de protons.

Le circuit de circulation comprend une entrée reliée à une source de réactif et une sortie pour le réactif ayant étant consommé ainsi que les produits issus de la réaction (principalement de l'eau).

Une plaque anodique comporte donc en général une entrée et une sortie pour l'hydrogène gazeux ainsi que les produits issus de la réaction (principalement de l'eau).

De la même façon, une plaque cathodique comporte donc en général une entrée et une sortie pour l'air.

Un raccord est généralement prévu pour chaque orifice d'entrée et pour chaque orifice de sortie de fluide de chaque plaque. Ainsi chaque raccord d'entrée relie fluidiquement une entrée de la plaque avec une source de réactif (hydrogène ou air par exemple). De même, chaque raccord de sortie relie fluidiquement une sortie de la plaque avec un collecteur de récupération du réactif consommé (hydrogène ou air).

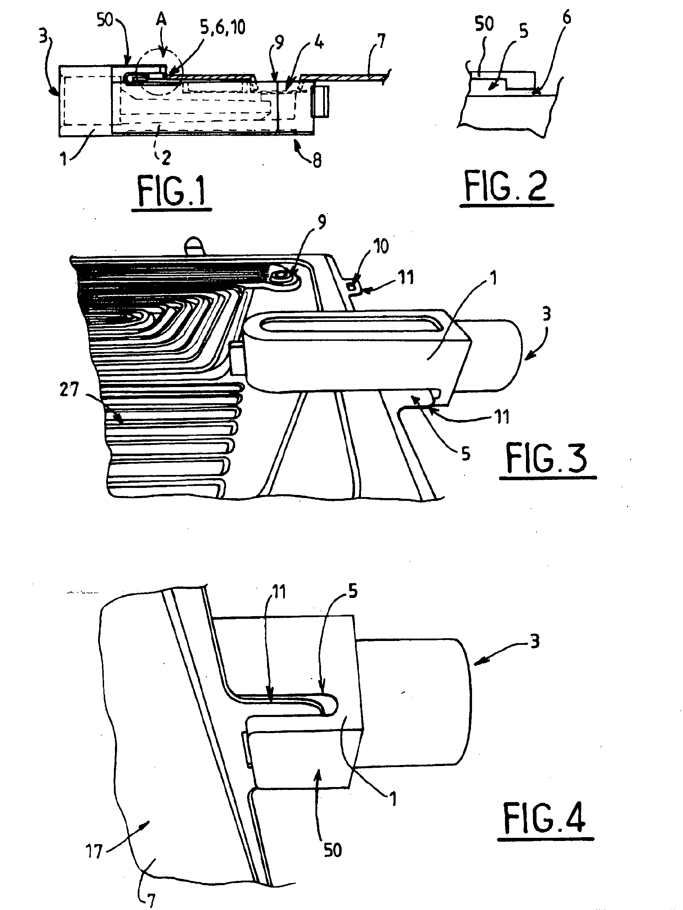

La figure 1 illustre un exemple d'attache d'un raccord sur une plaque 7 de pile à combustible. Ce raccord 8 peut être utilisé pour une plaque anodique ou une plaque cathodique, aussi bien pour une entrée de fluide réactif de fluide que pour une sortie de fluide réactif.

Le raccord 8 de fluide comprend, classiquement, un corps 1 définissant un passage 2 interne de fluide qui s'étend entre une première extrémité 3 et une seconde 4 extrémité du corps 1.

La première extrémité 3 est destinée à être reliée
- à une arrivée de fluide réactif lorsque le raccord 8 amène un fluide vers la plaque 7 ou
- à un collecteur de fluide réactif lorsque le raccord 8 évacue un fluide hors de la plaque 7.

La seconde extrémité 4 du corps 1 est destinée à être reliée
- à un orifice 9 d'entrée de la plaque 7 (lorsque le raccord 8 amène un fluide à la plaque) ou
- à une sortie d'un circuit de réactif (lorsque le raccord 8 évacue un fluide hors de la plaque 7).

Le corps 1 du raccord 8 est par exemple constitué ou comprend du plastique.

Ce corps 1 comporte une fente 5 d'accrochage prévue pour accueillir une portion de plaque 7. Plus précisément, une des faces internes de la fente 5 comprend un organe 6 d'attache mâle ou femelle destiné à coopérer en accrochage mécanique avec un organe d'attache femelle ou mâle conjugué d'une plaque 7 de pile à combustible introduite dans la fente 5. Dans l'exemple représenté aux figures 1 et 2, une face interne de la fente 5 comporte une protubérance 6 formant un ergot destiné à coopérer en accrochage avec un orifice 10 d'une plaque 7.

La fente 5, de préférence délimitée par une languette 50 flexible ou non comprenant l'ergot 6 permet ainsi de fixer de façon amovible le raccord 8 sur la plaque 7 par déformation élastique. Alternativement ou cumulativement, la fixation peut également être obtenue par déformation élastique de la plaque elle-même.

La fente 5 et l'ergot 6 sont disposés relativement de sorte que, lorsque le raccord 8 est encliqueté sur la plaque 7, la seconde extrémité 4 du corps 1 du raccord 8 vient se positionner en vis-à-vis d'un orifice 9 de plaque 7.

Comme visible aux figures 1 et 3, les orifices peuvent être entouré par une bordure circulaire en saillie par rapport au plan de la plaque 7 et la seconde extrémité 4 du corps 1 du raccord forme une gorge complémentaire de la bordure en saillie du au moins un orifice 9.

C'est-à-dire que la seconde extrémité 4 du corps 1 de chaque raccord coopère de façon étanche son orifice 9 respectif. Un joint peut être inséré dans la bordure circulaire afin de faciliter l'étanchéité.

La plaque 7 comprend ou est constituée d'un matériau métallique et/ou d'un alliage métallique et/ou de carbone et/ou de composite de carbone.

La plaque 7 a par exemple une forme générale parallélépipédique et est obtenue par moulage et/ou emboutissage et/ou hydroformage et/ou usinage. Les organes 10 d'attache (orifices 9) de la plaque 7 prévus pour permettre l'attache d'un raccord peuvent être formés sur des pattes 11 respectives qui s'étendent par rapport à la bordure de la plaque (cf. figure 3 et 4).

Comme visible aux figures, la fente 5 de chaque raccord peut être située dans un plan distinct du passage 2 interne de fluide de sorte que, lorsque le raccord 8 est en position attachée sur la plaque 7, le passage 2 interne de fluide est situé du côté de face inactive 27 de la paque 7.

On conçoit donc aisément que, tout en étant de structure simple et peu coûteuse, permet d'améliorer le montage et l'utilisation des plaques de piles à combustible munies de raccords de fluides.

L'entrée de la fente 5 est facilement glissée sur la plaque 7 et vient se positionner et se clipper sans effort et sans risque d'erreur.

En effet, le positionnement de l'entrée gaz est facile, rapide et fiable. Une fois en place mécaniquement, le raccord de fluide ne bouge plus. La plaque 7 peut être manipulée sans risque de perte du raccord. La maintenance est aisée puisque les entrées/sorties peuvent être facilement démontées puis remontées sans dommages pour la plaque.

## Revendications

1. Raccord de fluide pour plaque (7) de pile à combustible, comprenant un corps (1) définissant un passage (2) interne de fluide qui s'étend entre une première extrémité (3) du corps (1) destinée à être reliée à une arrivée de fluide réactif ou à un collecteur de fluide réactif et une seconde extrémité (4) du corps (1) destinée à être reliée avec un orifice (9) d'entrée ou de sortie d'un circuit de réactif d'une plaque de pile à combustible, **caractérisé en ce que** le corps (1) du raccord (8) comprend une fente (5) d'accrochage, et **en ce qu'**au moins une des faces interne de la fente (5) comprend un organe (6) d'attache mâle ou femelle, l'organe (6) d'attache de la fente (5) étant destiné à coopérer en accrochage mécanique avec un organe d'attache femelle ou mâle conjugué d'une plaque (7) de pile à combustible introduite dans la fente (5).

2. Plaque (7) de pile à combustible comprenant au moins un raccord (8) de fluide selon la revendication 1, la plaque (7) comprenant une face (17) dite réactive comportant un circuit de circulation pour un réactif, et une face (27) dite inactive, la plaque (7) comprenant au moins un orifice (9) d'entrée ou de sortie de réactif raccordé au circuit de circulation, la plaque (7) comprenant au moins un organe (10) d'attache adjacent à l'orifice (9) et coopérant en accrochage avec un organe (6) d'attache conjugué formé sur une face interne de la fente (5) d'accrochage du corps (1) du raccord (8), le raccord (8) étant fixé de façon amovible sur la plaque (7) par déformation élastique, en position fixée sur la plaque (7), la seconde extrémité (4) du corps (1) coïncidant avec l'orifice orifice (9) de plaque (7).

3. Plaque selon la revendication 2, **caractérisée en ce qu'**elle comprend au moins un orifice (9) d'entrée de réactif et au moins un orifice (9) de sortie de réactif et un organe (10) d'attache respectif adjacent à chaque orifice (9), chaque organe (10) d'attache de la plaque (7) coopérant en accrochage avec un organe (6) d'attache conjugué formé sur une face interne de la fente (5) d'accrochage du corps (1) d'un raccord (8) respectif, les raccords (8) étant fixés de façon amovible sur la plaque (7) par déformation élastique.

4. Plaque selon la revendication 2 ou 3, **caractérisée en ce que** le ou les organes (10) d'attache de la plaque (7) comportent un orifice formé dans l'épaisseur de la plaque (7) et **en ce que** le ou les organes (6) d'attache conjugués des raccords (8) comportent un ergot.

5. Plaque selon l'une quelconque des revendications 2 à 4, **caractérisée en ce que** la plaque (7) a une forme générale parallélépipédique et **en ce que** le ou les organes (10) d'attache de la plaque (7) sont formés sur des pattes (11) respectives qui s'étendent par rapport à la bordure de la plaque (7).

6. Plaque selon l'une quelconque des revendications 2 à 5, **caractérisée en ce que** le au moins un raccord (8) possède une fente (5) située dans un plan distinct du passage (2) interne de fluide de sorte que, lorsque le raccord (8) est en position attachée sur la plaque (7), le passage (2) interne de fluide est situé du côté de face inactive (27) de la plaque (7).

7. Plaque selon l'une quelconque des revendications 2 à 6, **caractérisée en ce que** le au moins un orifice (9) d'entrée ou de sortie traverse l'épaisseur de la plaque (7), la seconde extrémité (4) du corps (1) du raccord (8) étant conjuguée de la forme de l'orifice (9), en position attachée du raccord (8) sur la plaque (7), la seconde extrémité (4) du corps (1) du raccord coopérant de façon étanche avec ledit orifice (9).

8. Plaque selon la revendication 7, **caractérisé en ce que** le au moins un orifice (9) est entouré par une bordure en saillie par rapport au plan de la plaque (7) et **en ce que** la seconde extrémité (4) du corps (1) du raccord forme une gorge complémentaire de la bordure en saillie du au moins un orifice (9).

9. Plaque selon l'une quelconque des revendications 2 à 8, **caractérisée en ce que** le corps (1) du raccord (8) est constitué d'un matériau comprenant du plastique et **en ce que** la plaque (7) comprend ou est constituée d'un matériau métallique et/ou d'un alliage métallique et/ou de carbone.

10. Cellule élémentaire de pile à combustible comprenant deux plaques (7) de pile à combustible prenant en sandwich un Assemblage Membrane Electrode, **caractérisée en ce que** les plaques (7) sont conformes à l'une quelconque des revendications 1 à 9.

11. Pile à combustible comprenant un empilement de cellules élémentaires conformes à la revendication 10.

## Patentansprüche

1. Fluidstutzen für Brennstoffzellen-Platte (7), umfassend einen Körper (1), der einen inneren Fluiddurchlass (2) definiert, der sich erstreckt zwischen einem ersten Ende (3) des Körpers (1), das vorgesehen ist für die Verbindung mit einer Zuführung für ein reaktives Fluid oder mit einer Sammelleitung für ein reaktives Fluid, und einem zweiten Ende (4) des Körpers (1), das vorgesehen ist für die Verbindung mit einer Einlass- oder Auslassöffnung (9) eines reaktiven Kreislaufs einer Brennstoffzellen-Platte, **dadurch gekennzeichnet, dass** der Körper (1) des Stutzens (8) einen Einhakschlitz (5) umfasst und dass mindestens eine der inneren Flächen des Schlitzes (5) ein stecker- oder buchsenförmiges Befestigungsorgan (6) umfasst, wobei das Befestigungsorgan (6) für den Schlitz (5) bestimmt ist für das Zusammenwirken durch mechanisches Einhaken mit einem angepassten stecker- oder buchsenförmigen Befestigungsorgan für eine Brennstoffzellen-Platte (7), die in den Schlitz (5) eingeführt ist.

2. Brennstoffzellen-Platte (7), umfassend mindestens einen Fluidstutzen (8) nach Anspruch 1, wobei die Platte (7) eine so genannte reaktive Fläche (17) umfasst, die einen Umlaufkreislauf für ein Reagens aufweist, und eine so genannte inaktive Fläche (27) umfasst, wobei die Platte (7) mindestens eine Einlass- oder Auslassöffnung (9) für das Reagens umfasst, die mit dem Umlaufkreislauf verbunden ist, wobei die Platte (7) mindestens ein Befestigungsorgan (10) umfasst, das der Öffnung (9) benachbart ist und durch Einhaken mit einem angepassten Befestigungsorgan (6) zusammenwirkt, das an einer inneren Fläche des Einhakschlitzes (5) des Körpers (1) des Stutzens (8) gebildet ist, wobei der Stutzen (8) an der Platte (7), in an der Platte (7) ortsfester Position, durch elastische Verformung lösbar befestigt ist, wobei das zweite Ende (4) des Körpers (1) mit der Öffnung (9) der Platte (7) zusammenfällt.

3. Platte nach Anspruch 2, **dadurch gekennzeichnet, dass** sie mindestens eine Öffnung (9) für den Einlass eines Reagens und mindestens eine Öffnung (9) für den Auslass eines Reagens und ein jeweiliges Befestigungsorgan (10) umfasst, das jeder Öffnung (9) benachbart ist, wobei jedes Befestigungsorgan (10) für die Platte (7) durch Einhaken mit einem angepassten Befestigungsorgan (6) zusammenwirkt, das an einer inneren Fläche des Einhakschlitzes (5) des Körpers (1) eines jeweiligen Stutzens (8) gebildet ist, wobei die Stutzen (8) an der Platte (7) durch elastische Verformung lösbar befestigt sind.

4. Platte nach Anspruch 2 oder 3, **dadurch gekennzeichnet, dass** das oder die Befestigungsorgan(e) (10) für die Platte (7) eine Öffnung aufweisen, die in der Dicke der Platte (7) gebildet ist, und dass das oder die angepasste(n) Befestigungsorgan(e) (6) für die Stutzen (8) einen Vorsprung aufweisen.

5. Platte nach einem der Ansprüche 2 bis 4, **dadurch gekennzeichnet, dass** die Platte (7) eine allgemein parallelepipedförmige Form hat und dass das oder die Befestigungsorgan(e) (10) für die Platte (7) an jeweiligen Laschen (11) gebildet sind, die sich relativ zu dem Rand der Platte (7) erstrecken.

6. Platte nach einem der Ansprüche 2 bis 5, **dadurch gekennzeichnet, dass** der mindestens eine Stutzen (8) einen Schlitz (5) aufweist, der in einer anderen Ebene des inneren Fluiddurchlasses (2) befindlich ist, derart, dass, wenn der Stutzen (8) in an der Platte (7) befestigter Position ist, der innere Fluiddurchlass (2) sich auf der Seite der inaktiven Fläche (27) der Platte (7) befindet.

7. Platte nach einem der Ansprüche 2 bis 6, **dadurch gekennzeichnet, dass** die mindestens eine Einlass- oder Auslassöffnung (9) die Dicke der Platte (7) durchquert, wobei das zweite Ende (4) des Körpers (1) des Stutzens (8), in an der Platte (7) befestigter Position des Stutzens (8), an die Form der Öffnung (9) angepasst ist, wobei das zweite Ende (4) des Körpers (1) des Stutzens abdichtend mit der Öffnung (9) zusammenwirkt.

8. Platte nach Anspruch 7, **dadurch gekennzeichnet, dass** die mindestens eine Öffnung (9) von einem relativ zu der Ebene der Platte (7) vorspringenden Rand umgeben ist und dass das zweite Ende (4) des Körpers (1) des Stutzens eine Rille bildet, die zu dem vorspringenden Rand der mindestens einen Öffnung (9) komplementär ist.

9. Platte nach einem der Ansprüche 2 bis 8, **dadurch gekennzeichnet, dass** der Körper (1) des Stutzens (8) aus einem Material besteht, das Kunststoff enthält, und dass die Platte (7) ein metallisches Material und/oder eine metallische Legierung und/oder Kohlenstoff enthält oder daraus besteht.

10. Elementarzelle für eine Brennstoffzelle, umfassend zwei Brennstoffzellen-Platten (7), die sandwichartig eine Membran-Elektroden-Einheit aufnehmen, **dadurch gekennzeichnet, dass** die Platten (7) nach einem der Ansprüche 1 bis 9 ausgeführt sind.

11. Brennstoffzelle, umfassend einen Stapel Elementarzellen nach Anspruch 10.

## Claims

1. Fluid connector for a fuel cell plate (7), comprising a body (1) that defines an internal fluid passage (2) that extends between a first end (3) of the body (1), which end is intended for connection to a reactive fluid intake or to a reactive fluid collector, and a second end (4) of the body (1), which end is intended for connection to an inlet or outlet port (9) of a reactant circuit of a fuel cell plate, **characterised in that** the body (1) of the connector (8) comprises a latching slot (5), and **in that** at least one of the internal surfaces of the slot (5) comprises a male or female attachment member (6), the attachment member (6) of the slot (5) being intended to interlock mechanically with a matching female or male attachment member of a fuel cell plate (7) inserted in the slot (5).

2. Fuel cell plate (7) comprising at least one fluid connector (8) according to claim 1, the plate (7) comprising a "reactive" surface (17) having a circuit for the circulation of a reactant, and an "inactive" surface (27), the plate (7) comprising at least one reactant inlet or outlet port (9) that is connected to the circulation circuit, the plate (7) comprising at least one attachment member (10) that is adjacent to the port (9) and interlocks with a matching attachment member (6) formed on the internal surface of the latching slot (5) of the body (1) of the connector (8), the connector (8) being removably fixed to the plate (7) by elastic deformation, in a fixed position on the plate (7), the second end (4) of the body (1) coinciding with the port port (9) of the plate (7).

3. Plate according to claim 2, **characterised in that** it comprises at least one reactant inlet port (9) and at least one reactant outlet port (9) and a corresponding attachment member (10) that is adjacent to each port (9), each attachment member (10) of the plate (7) interlocking with a matching attachment member (6) formed on an internal surface of the latching slot (5) of the body (1) of a corresponding connector (8), the connectors (8) being removably fixed to the plate (7) by elastic deformation.

4. Plate according to either claim 2 or claim 3, **characterised in that** the attachment member(s) (10) of the plate (7) has/have a port formed in the thickness of the plate (7), and **in that** the matching attachment member(s) (6) of the connectors (8) has/have a lug.

5. Plate according to any of claims 2 to 4, **characterised in that** the plate (7) has a generally parallelepiped shape, and **in that** the attachment member(s) (10) of the plate (7) are formed on corresponding tabs (11) that extend relative to the edge of the plate (7).

6. Plate according to any of claims 2 to 5, **characterised in that** the at least one connector (8) has a slot (5) located in a separate plane from the internal fluid passage (2) such that, when the connector (8) is in the attached position on the plate (7), the internal fluid passage (2) is located on the side of the inactive surface (27) of the plate (7).

7. Plate according to any of claims 2 to 6, **characterised in that** the at least one inlet or outlet port (9) passes through the thickness of the plate (7), the second end (4) of the body (1) of the connector (8) matching the shape of the port (9), in an attached position of the connector (8) on the plate (7), the second end (4) of the body (1) of the connector cooperating in a fluid-tight manner with said port (9).

8. Plate according to claim 7, **characterised in that** the at least one port (9) is surrounded by an edge that projects relative to the plane of the plate (7), and **in that** the second end (4) of the body (1) of the connector forms a groove that complements the projecting edge of the at least one port (9).

9. Plate according to any of claims 2 to 8, **characterised in that** the body (1) of the connector (8) is made of a material comprising plastics material, and **in that** the plate (7) comprises or is made of a metal material and/or a metal alloy and/or carbon.

10. Basic cell for a fuel cell, comprising two fuel cell plates (7) sandwiching an electrode membrane assembly, **characterised in that** the plates (7) are in accordance with any of claims 1 to 9.

11. Fuel cell comprising a stack of basic cells according to claim 10.
